# EUROPÄISCHE PATENTSCHRIFT

(11) **EP 0 673 853 B1**
(45) Veröffentlichungstag und Bekanntmachung des Hinweises auf die Patenterteilung: **04.02.1998**
(21) Anmeldenummer: 94119922.6
(22) Anmeldetag: 16.12.1994
(51) Int. Cl.: B65D 55/02

(54) **Diebstahlgesicherter Artikel**
Article with anti-theft device
Article pourvu d'un dispositif antivol

(30) Priorität: 24.03.1994 DE 4410137
(43) Veröffentlichungstag der Anmeldung: 27.09.1995
(73) Patentinhaber: Esselte Meto International GmbH, 64646 Heppenheim (DE)
(72) Erfinder: Chamberlain, John R.B., Pinner, Middx HA5 3AN (GB)

(56) Entgegenhaltungen:
- EP-A- 0 585 076
- EP-A- 0 619 243
- US-A- 5 267 756

## Beschreibung

Die Erfindung bezieht sich gemäß Oberbegriff des Anspruchs 1 auf einen diebstahlgesicherten Artikel, der mit einem elektromagnetischen Sicherungselement gegen Entfernen aus einem Verkaufsraum geschützt und mit einem Echtheitsnachweis versehen ist.

Im Stande der Technik werden hochwertigere Artikel in Verkaufseinrichtungen in der Weise gegen Diebstähle geschützt, daß im Bereich des Ausganges des Verkaufsraumes ein Detektor aufgestellt wird, der mit einem in Etiketten oder Anhängern untergebrachten, an den Verkaufsgegenständen befestigten Sicherungselement in Wechselwirkung tritt. Letzteres interagiert beim Unterschreiten eines Schwellenabstandes elektromagnetisch, d.h. durch hochfrequente Wellen oder magnetisch mit dem Detektor. Falls somit ein - nicht zuvor durch das Verkaufspersonal deaktiviertes - Sicherungselement in der Absicht, es zu stehlen, am Detektor vorbeigeführt wird, spricht der Detektor an und gibt ein akustisches und/oder optisches Warnsignal ab.

Weiterhin werden hochwertige Markenartikel in steigendem Maße mit Echtheitsnachweisen, wie beispielsweise Hologrammen, als Zeugnisse für ihre Authentizität versehen (siehe US-A-5 267 756), um dem Kunden die Erkennung von Fälschungen zu erleichtern. Derartige, nachgeahmte Produkte disqualifizieren sich häufig durch mangelhafte Qualität (z.B. billige Filme in Verpackungen von eingeführten Qualitätsfilmen) oder können sogar gefährlich sein, wie nachgeahmte Bremsbeläge für Kraftfahrzeuge, so daß dem Käufer sowie dem Endverkäufer, dem Großhändler und den Hersteller Nachteile entstehen. Oft machen Kunden, die unwissentlich ein gefälschtes Produkt erwarben, und damit unzufrieden sind, Ansprüche gegen den Verkäufer, den Großhändler oder den Hersteller der echten Produkte geltend, da sie letzteren für den wirklichen Produzenten halten. Bei gerichtlichen Prozessen erweist es sich für die beklagten Hersteller oft als problematisch, einen Nachweis zu führen, daß die beanstandeten Gegenstände nicht von ihm stammen. Da derartige Schwierigkeiten bei einer entsprechenden Kennzeichnung der Artikel mit Echtheitsnachweisen nicht zu befürchten sind, werden immer mehr Gegenstände derart zertifiziert.

Als nachteilig ist bei den nach konventionellen Methoden gegen Diebstahl gesicherten Artikeln anzusehen, daß es sich als wenig problematisch erweist, die Sicherungselemente optisch oder durch Fühlen zu erkennen und vom Artikel zu entfernen. Ein Dieb kann somit die Aktivierung der Ausgangskontrolle unschwer unterbinden und den Gegenstand entwenden.

Ausgehend vom Stande der Technik liegt der Erfindung das Problem zugrunde, eine Diebstahlsicherung für Artikel zu schaffen, die sich durch verbesserte Sicherheit auszeichnet.

Erfindungsgemäß wird die Aufgabe dadurch gelöst, daß der Echtheitsnachweis durch eine Klebeverbindung unlösbar mit dem Sicherungselement verbunden ist und, daß das Sicherungselement durch eine Klebeverbindung an dem Artikel fixiert ist.

Der Kerngedanke besteht darin, das Sicherungselement fest mit dem - möglichst schwer nachahmbaren, fälschungssicheren - Echtheitsnachweis zu verbinden. Die entstehende, im folgenden als unlösbar bezeichnete Kombination ist zumindest derart dauerhaft, daß es sich als unmöglich erweist, das Sicherungselement vom Artikel zu entfernen, ohne gleichzeitig den Echtheitsnachweis abzutrennen. Vorzugsweise ist die Verbindung sogar so gewählt, daß ein Lösen des Sicherungselementes zwangsläufig eine Zerstörung des Echtheitsnachweises zur Folge hat.

Beim Entfernen des Sicherungselements wird stets der Echtheitsnachweis abgelöst, so daß der Artikel zwar ohne Aktivierung der Ausgangskontrollen aus dem Verkaufsraum entfernt werden kann, wegen des abgelösten Echtheitsnachweises jedoch entscheidend an Wert verliert. Beim Versuch, den entwendeten Gegenstand weiterzuverkaufen, wird ihn ein potentieller Käufer anhand des fehlenden Sicherheitselements als Fälschung minderer Qualität erkennen und von einem Kauf absehen. Auch falls der Artikel nur für den persönlichen Gebrauch bestimmt ist, können ihn unbeteiligte Personen als Falsifikat oder gestohlen identifizieren. Im Ergebnis sind zumindest systematische, organisierte Diebstähle insbesondere hochwertigerer Waren nicht mehr zu befürchten.

Die Vorteile der Erfindung bestehen vornehmlich darin, daß ein potentieller Dieb mangels ausreichender Verwertungsmöglichkeiten des Stehlgutes davon absehen wird, das Sicherungselement und den Echtheitsnachweis zu entfernen: Er wird entweder den Artikel stehenlassen oder an der Ausgangskontrolle ertappt. Außerdem ist die Nachahmung der erfindungsgemäßen Kombination aus Sicherungselement und Echtheitsnachweis problematischer und teurer herstellbar als letzterer allein, da auch ein entsprechendes Sicherungselement benötigt wird, um den Artikel echt aussehen zu lassen. Für den Hersteller erweist es sich lediglich als erforderlich, ein kombiniertes, sicherndes und zertifizierendes Element auf den Artikel aufzubringen. Die Vorzüge gehen somit über eine separate Kennzeichnung mit einem Echtheitsnachweis und Sicherung gegen Diebstahl bei weitem hinaus.

Der mit dem Sicherungselement kombinierte Echtheitsnachweis ist für den Geschäftsinhaber primär aufgrund der sinkenden Diebstahlquote von Vorteil, während ein weiterer Nutzen für den Hersteller in der höheren Fälschungssicherheit des Artikels besteht. Diese ist letztendlich für alle Beteiligten, d.h. den Kunden, den Hersteller, den Großhändler sowie den Endverkäufer vorteilhaft, da die Gefahr, Nachteile durch die mangelhafte Qualität nachgeahmter Waren zu erleiden, bzw. dafür in Regreß genommen zu werden, reduziert ist.

Erfindungsgemäß gekennzeichnete und gesicherte Artikel werden aufgrund der genannten Vorzüge hohe Akzeptanz bei Verbrauchern, Händlern und Herstellern genießen und somit entscheidende Marktvorteile erlangen.

Um zu verhindern, daß ein potentieller Dieb das Sicherungselement als solches identifiziert, bietet sich an, es an der dem Artikel zugewandten Fläche des Echtheitsnachweises anzubringen. Da es durch letzteren verdeckt wird, werden unerfahrene Personen das Sicherungselement nicht erkennen, es somit bei einem Diebstahlversuch auch nicht vom Artikel entfernen, so daß der am Ausgang aufgestellten Detektor anspricht.

Im Rahmen des erfindungsgemäßen Gedankens ist die Art des Echtheitsnachweises beliebig. Es kann beispielsweise ein an sich bekanntes Hologramm oder - ebenfalls kommerziell erhältliches - transparentes, oberflächlich mit parallel zueinander verlaufenden Zylinderlinsen versehenes Material sein, wobei jeder Zylinderlinse zumindest eine im Inneren des Materials parallel zu ihrer Achse verlaufende, farbige Linie zugeordnet ist. Derartige Echtheitszeugnisse zeichnen sich durch hohe Fälschungssicherheit und Preiswürdigkeit aus. Entscheidend ist bei den erwähnten Echtheitsnachweisen jedoch, daß unschwer optisch erkennbar ist, ob daran manipuliert wurde; beim Versuch, das Sicherungselement in der Weise zu entfernen, daß der Echtheitsnachweis abgezogen und - nach dem Ablösen des Sicherungselementes - wieder aufgeklebt wird, ändern sich seine optischen Eigenschaften derart stark, daß die Manipulation offensichtlich ist. Daher ist ausgeschlossen, daß das Sicherungselement noch in den Verkaufsräumen vom Artikel getrennt und letzterer mit dem wiederaufgebrachtem Echtheitsnachweis gestohlen wird.

Auch bezüglich der Art des Sicherungselementes bestehen verschiedene Möglichkeiten:

Zunächst kann ein schmaler Streifen aus weichmagnetischem Material zum Einsatz kommen. Er wird in der Ausgangskontrolle mit einem magnetischen Wechselfeld beaufschlagt und entsprechend der jeweiligen Frequenz ummagnetisiert. Da der Streifen nunmehr selbst ein Wechselfeld abstrahlt, das von einer Empfängerantenne detektiert wird, erfolgt eine Aktivierung des Diebstahlalarmes. Zur Deaktivierung kann der Streifen zusätzlich mit im Abstand voneinander angeordneten, hartmagnetischen Metallstücken überdeckt werden.

Weiterhin ist eine weichmagnetische, auf einer Trägerfolie aufgebrachte, d.h. aufgedampfte oder aufgesputterte Dünnfilmschicht als Sicherungselement vorgeschlagen. Zum Deaktivieren kann darunter und/oder darüber eine hartmagnetische Metallfolie, beispielsweise aus Nickel vorgesehen werden.

Schließlich sind alternativ zu den magnetischen Sicherungseinrichtungen elektromagnetisch arbeitende Resonanzschwingkreise empfohlen, die als Dünnschichtschaltungen realisiert werden können. Am Ausgang werden die aus einem Kondensator und einer Induktivität bestehenden Schwingkreise mit einem elektromagnetischen Hochfrequenzfeld beaufschlagt, so daß sie im Resonanzfall ebenfalls Wellen abstrahlen, die zur Alarmierung mittels geeigneter Antennen erfaßt werden.

Die Befestigung des Sicherungselementes einerseits am Echtheitsnachweis und/oder dem Artikel andererseits erfolgt durch eine Klebeverbindung. Insbesondere bei der Fixierung des Echtheitsnachweises muß dabei - durch geeignete Wahl des Klebers - eine hinreichende Festigkeit gewährleistet sein. Der Vorzug besteht in der leichten Realisierbarkeit der Verbindung.

Aus Gründen einer rationelleren Produktion bietet sich an, vorfabrizierte, auf einer selbstklebenden Trägerfolie aufgebrachte Sicherungselemente zu verwenden. In der Regel kommt die adhäsive Seite der Trägerfolie auf dem Artikel zu liegen, während der Echtheitsnachweis an der gegenüberliegenden, nicht klebenden Fläche befestigt wird.

Auch der Echtheitsnachweis kann auf seiner dem Artikel zugewandten, d.h. der am Sicherungselement anliegenden Fläche mit einer selbstklebenden Beschichtung versehen werden, um seine Montage zu erleichtern.

Wird die Erfindung zur Sicherung und Zertifizierung einer Kompaktschallplatte (CD) eingesetzt, werden das Sicherungselement und der Echtheitsnachweis zur Vermeidung beim Abspielen störender Unwuchten vorzugsweise ringförmig um die zentrale Öffnung auf der Oberseite der CD aufgebracht.

Die Erfindung läßt sich außer bei Kompaktschallplatten bei beliebigen Gegenstände verwenden. So kann sie bei Verpackungen (z.B. für Nahrungsmittel), bei Flaschen, bei Elektrogeräten, Gartengeräten, Tonband-, Videokassetten, Disketten, Disketten-, Kompaktschallplatten-, Video- oder Tonbandkassettenhüllen, bei Büroartikeln, optischen Geräten, Möbelstücken, Büchern oder Kosmetika eingesetzt werden.

Bei Flaschen oder Nahrungsmittelpackungen kann durch den Echtheitsnachweis auch eine weitere Funktion übernommen werden: Wird er an der Entnahmeöffnung angebracht, so ist eine Kontrolle möglich, ob der Verschluß bereits geöffnet war. Ein Kunde kann eine bereits geöffnete Packung bzw. Flasche unschwer erkennen und wird ggf. von einem Kauf absehen.

Schließlich ist denkbar, auch Textilien mit einem kombinierten Sicherungselement und Echtheitsnachweis auszustatten. Ersteres wird beispielsweise zwischen dem - in der Regel ebenfalls aus textilen Materialien bestehenden - Echtheitsnachweis, z.B. einem Emblem oder Schriftzug, und der eigentlichen Kleidung durch eine Klebeverbindung befestigt. Alternativ ist denkbar, das Sicherungselement in den textilen Echtheitsnachweis einzuweben oder einzunähen. In jedem Fall wird ein potentieller Dieb entweder den Echtheitsnachweis entfernen (so daß der Artikel in hohem Maße an Wiederverkaufswert verliert) oder an den Kontrollelementen ertappt.

Im folgenden werden zwei Ausführungsformen der Erfindung anhand der Zeichnungen näher erläutert. Sie zeigen in schematischer Darstellung in
- Figur 1 :: eine diebstahlgesicherte Kompaktschallplatte,
- Figur 2:: eine diebstahlgesicherte Flasche.

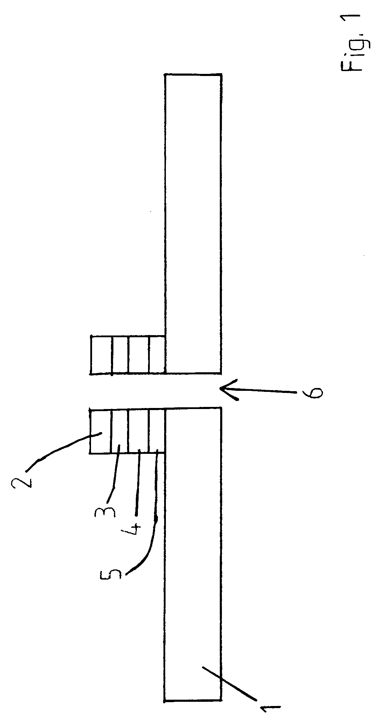

In Figur 1 ist eine Kompaktschallplatte (1) im Schnitt dargestellt. Ringförmig umlaufend um eine zentrische Öffnung (6) ist ein aus mehreren Schichten bestehendes, kombiniertes Sicherungs- und Echtheitsnachweiselement angeordnet. Ein gegen Diebstahl schützendes Sicherungselement (4), das im dargestellten Beispiel eine weichmagnetische Dünnfilmschicht ist, ist auf einer Trägerfolie (5) aufgebracht. Die Trägerfolie (5) ist auf ihrer Unterseite mit einer selbstklebenden Beschichtung versehen, die mit der Oberfläche der Kompaktschallplatte (1) in Berührung steht. Auch der Echtheitsnachweis (2), ein Hologramm, ist auf seiner Unterseite mit einer selbstklebenden Beschichtung (3) versehen, die ihn unlösbar mit dem Sicherungselement (4) verbindet.

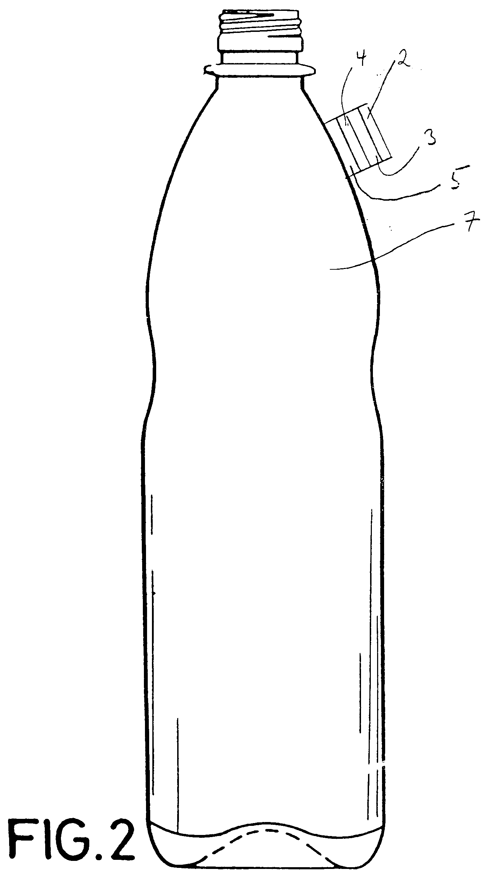

Die Figur 2 zeigt einen Schnitt durch eine gesicherte Flasche (7). Unmittelbar unterhalb des Flaschenhalses ist die bereits in Figur 1 dargestellte Schichtstruktur angebracht: Zwischen der Wandung der Flasche (7) und dem Sicherungselement (4) ist eine selbstklebende Trägerfolie (5) angeordnet. Eine selbstklebende Beschichtung (3) des Echtheitsnachweises (2) dient zu seiner unlösbaren Befestigung am Sicherungselement (4). Falls die Flasche (7) mit einer zur Versiegelung dienenden Banderole ausgestattet ist, kann auch ein Teil des Sicherungselements (4) daran anliegen, so daß dem Käufer eine eventuelle Öffnung der Versiegelung anhand der Beschädigung des Echtheitsnachweises (2) unschwer erkennbar ist.

Im Ergebnis erhält man einen gegen Diebstahl geschützten Artikel, der sich durch entscheidend verbesserte Diebstahl- und Fälschungssicherheit auszeichnet.

## Patentansprüche

1. Vorrichtung zur Sicherung eines Artikels gegen Diebstahl aus einem Verkaufsraum, bestehend aus einem elektromagnetischen Sicherungselement (4), das bei unerlaubtem Passieren eines durch einen Detektor gesicherten Bereichs des Verkaufsraumes ein optisches und/oder akustisches Warnsignal in dem Detektor auslöst, und einem Echtheitsnachweis (2), der die Herkunft des Artikels kennzeichnet,
**dadurch gekennzeichnet**,
daß der Echtheitsnachweis (2) durch eine Klebeverbindung unlösbar mit dem Sicherungselement (4) verbunden ist und daß das Sicherungselement (4) durch eine Klebeverbindung an dem Artikel (1, 7) fixiert ist.

2. Vorrichtung nach Anspruch 1,
**dadurch gekennzeichnet**,
daß das Sicherungselement an der dem Artikel (1, 7) zugewandten Fläche des Echtheitsnachweises angebracht ist.

3. Vorrichtung nach Anspruch 1 oder 2,
**dadurch gekennzeichnet**,
daß der Echtheitsnachweis (2) ein Hologramm ist.

4. Vorrichtung nach Anspruch 1 oder 2,
**dadurch gekennzeichnet**,
daß der Echtheitsnachweis (2) transparentes, oberflächlich mit parallel zueinander verlaufenden Zylinderlinsen versehenes Material ist, wobei jeder Zylinderlinse zumindest eine im Inneren des Materials parallel zu ihrer Achse verlaufende, farbige Linie zugeordnet ist.

5. Vorrichtung nach einem der Ansprüche 1 bis 4,
**dadurch gekennzeichnet**,
daß das Sicherungselement (4) ein weichmagnetischer Metallstreifen ist.

6. Vorrichtung nach Anspruch 5,
**dadurch gekennzeichet**,
daß der Metallstreifen mit im Abstand voneinander angeordneten, hartmagnetischen Metallbandstücken überdeckt ist.

7. Vorrichtung nach einem der Ansprüche 1 bis 6,
**dadurch gekennzeichnet**,
daß das Sicherungselement (4) eine weichmagnetische, auf einer Trägerfolie aufgebrachte Dünnfilmschicht ist.

8. Vorrichtung nach Anspruch 7,
**dadurch gekennzeichnet**,
daß über und/oder unter der Dünnfilmschicht eine hartmagnetische Metallfolie angeordnet ist.

9. Vorrichtung nach einem der Ansprüche 1 bis 4,
**dadurch gekennzeichnet**,
daß das Sicherungselement (4) ein Resonanzschwingkreis ist.

10. Vorrichtung nach einem der Ansprüche 1 bis 10,
**dadurch gekennzeichnet**,
daß das Sicherungselement (4) auf einer selbstklebenden Trägerfolie (5) positioniert ist, deren adhäsive Seite vorzugsweise am Artikel (1, 7) anliegt.

11. Artikel nach einem der Ansprüche 1 bis 10,
**dadurch gekennzeichnet**,
daß die dem Artikel (1, 7) zugewandte Fläche des Echtheitsnachweises (2) mit einer selbstklebenden Beschichtung (3) versehen ist.

12. Vorrichtung nach einem der Ansprüche 1 bis 11,
**dadurch gekennzeichnet**,
daß der Artikel eine Kompaktschallplatte (1) ist, um deren zentrale Öffnung (6) der Echtheitsnachweis (2) und das Sicherungselement (4) ringförmig umlaufen.

## Claims

1. A device for protecting an article against pilferage in a sales room, comprising an electromagnetic security element (4) producing a visual and/or audible alarm signal in a detector on unauthorized passage through a zone of the sales room protected by the detector, and a proof of authenticity (2) identifying the article's origin,
**characterized in that** the proof of authenticity (2) is non-detachably connected with the security element (4) by an adhesive bond, and that the security element (4) is affixed to the article (1, 7) by an adhesive bond.

2. The device as claimed in claim 1,
**characterized in that** the security element is affixed to the surface of the proof of authenticity on the side close to the article (1, 7).

3. The device as claimed in claim 1 or 2,
**characterized in that** the proof of authenticity (2) is a hologram.

4. The device as claimed in claim 1 or 2,
**characterized in that** the proof of authenticity (2) is a transparent material provided on its surface with cylindrical lenses extending parallel to each other, each cylindrical lens having associated with it at least one colored line extending in the interior of the material parallel to the lens's axis.

5. The device as claimed in any one of the claims 1 to 4,
**characterized in that** the security element (4) is a soft magnetic metal strip.

6. The device as claimed in claim 5,
**characterized in that** the metal strip is covered by hard magnetic pieces of metal ribbon arranged in spaced relation to each other.

7. The device as claimed in any one of the claims 1 to 6,
**characterized in that** the security element (4) is a soft magnetic thin-film layer applied to a substrate (5).

8. The device as claimed in claim 7,
**characterized in that** a hard magnetic metal film is arranged above and/or below the thin-film layer.

9. The device as claimed in any one of the claims 1 to 4,
**characterized in that** the security element (4) is a resonant circuit.

10. The device as claimed in any one of the claims 1 to 9,
**characterized in that** the security element (4) is positioned on a self-adhesive substrate (5) having its adhesive side preferably in engagement with the article (1, 7).

11. The article as claimed in any one of the claims 1 to 10,
**characterized in that** the surface of the proof of authenticity (2) on the side close to the article (1, 7) is provided with a self-adhesive layer (3).

12. The device as claimed in any one of the claims 1 to 11,
**characterized in that** the article is a compact disc (1) having the proof of authenticity (2) and the security element (4) arranged around the central opening (6) thereof in a ring-shaped configuration.

## Revendications

1. Dispositif de protection d'un article contre le vol dans une surface de vente, se composant d'un élément de protection électromagnétigue (4) gui déclenche, lors du passage non autorisé à travers un secteur de la surface de vente équipé d'un détecteur, un signal optique et/ou acoustique, et d'une preuve d'authenticité (2) identifiant l'origine de l'article,
**caractérisé en ce que** la preuve d'authenticité (2) est reliée de façon indissoluble à l'élément de protection (4) par un lien adhésif et que l'élément de protection (4) est fixé à l'article (1, 7) par un lien adhésif.

2. Dispositif selon la revendication 1,
**caractérisé en ce que** l'élément de protection est apposé sur la face tournée vers l'article (1, 7) de la preuve d'authenticité.

3. Dispositif selon l'une quelconque des revendications 1 ou 2,
**caractérisé en ce que** la preuve d'authenticité (2) est un hologramme.

4. Dispositif selon l'une quelconque des revendications 1 ou 2,
**caractérisé en ce que** la preuve d'authenticité (2) est un matériau transparent, dont la surface est équipée de lentilles cylindriques s'étendant parallèlement l'une à l'autre, en quoi à chaque lentille cylindrique est associée au moins une ligne de couleur s'étendant à l'intérieur du matériau parallèlement à l'axe de la lentille.

5. Dispositif selon l'une quelconque des revendications 1 à 4,
**caractérisé en ce que** l'élément de protection (4) est une bande de métal magnétique doux.

6. Dispositif selon la revendication 5,
**caractérisé en ce que**
la bande de métal est recouverte de pièces magnétiques dures de ruban en métal disposées à distances les unes des autres.

7. Dispositif selon l'une quelconque des revendications 1 à 6,
**caractérisé en ce que** l'élément de protection (4) est un mince film magnétique doux dont est revêtue une feuille porteuse (5).

8. Dispositif selon la revendication 7,
**caractérisé en ce qu'**une feuille de métal magnétique dur est ordonné sur et/ou sous le mince film.

9. Dispositif selon l'une quelconque des revendications 1 à 4,
**caractérisé en ce que** l'élément de protection (4) est un circuit résonnant.

10. Dispositif selon l'une quelconque des revendications 1 à 9,
**caractérisé en ce que**
l'élément de protection (4) est positionné sur une feuille porteuse autocollante (5) dont la face adhésive est de préférence en prise avec l'article (1, 7).

11. Article selon l'une quelconque des revendications 1 à 10,
**caractérisé en ce que** la surface de la preuve d'authenticité (2) tournée vers l'article (1, 7) est pourvue d'un revêtement autocollant (3).

12. Dispositif selon l'une quelconque des revendications 1 à 11,
**caractérisé en ce que** l'article est un disque compact (1) ayant la preuve d'authenticité (2) et l'élément de protection (4) disposés en anneau autour de son ouverture centrale (6).
